(19) Europäisches Patentamt
European Patent Office
Office européen des brevets

(11) Publication number: **0 417 513 A1**

(12) **EUROPEAN PATENT APPLICATION**

(21) Application number: **90116059.8**

(22) Date of filing: **22.08.90**

(51) Int. Cl.⁵: **C08L 79/08**, //(C08L79/08, 83:12)

(30) Priority: **11.09.89 US 405308**

(43) Date of publication of application: **20.03.91 Bulletin 91/12**

(84) Designated Contracting States: **DE ES FR GB IT NL**

(71) Applicant: **GENERAL ELECTRIC COMPANY**
**1 River Road**
**Schenectady New York 12305(US)**

(72) Inventor: **Bassett, Walter Herbert, Jr.**
**623 Crestmont Drive**
**Evansville, Indiana 47712(US)**
Inventor: **Glaser, Raymond Hans**
**10500 Middle Mount Vernon Road**
**Mt. Vernon, Indiana 47620(US)**

(74) Representative: **Catherine, Alain**
**General Electric France Service de Propriété**
**Industrielle 18 Rue Horace Vernet**
**F-92136 Issy-Les-Moulineaux Cedex(FR)**

# (54) Flame resistant polyetherimide-siloxane-polyetherimide copolymer blends.

(57) Polymer blends exhibiting excellent high-temperature properties contain a polyetherimide, 0.2 to 15 weight percent of a siloxane-polyetherimide copolymer and, optionally, a filler such as chopped glass fiber. These blends also exhibit high impact strengths, good blow-moldability and injection moldability, as well as amenability to thermoforming.

EP 0 417 513 A1

# FLAME RESISTANT POLYETHERIMIDE-SILOXANE-POLYETHERIMIDE COPOLYMER BLENDS

## Background of the Invention

This invention relates to improved melt processed blends of polyetherimides and siloxane polyetherimide copolymers. These blends are characterized by very low flammabilities. They are particularly suited for the construction of various panels and parts for aircraft interiors.

Because of their light weight, durability and strength, engineering thermoplastics are used for the construction of many components of aircraft interiors. Components such as wall panels, overhead storage lockers, serving trays, seat backs, cabin partitions and the like are conveniently and economically fabricated from thermoplastics by extrusion, thermoforming, injection molding and blow-molding techniques.

Recent attention to the effects of fire and smoke on survivability during aircraft mishaps has led to the promulgation of standards for the flame resistance of construction materials used for the interiors of transport category aircraft. One drawback of engineering thermoplastics conventionally used for the construction of aircraft interior components is their inability to meet the latest flammability performance standards. Such standards are embodied in 1988 amendments to Parts 25 and 121, Airworthiness Standards-Transport Category Airplanes of Title 14, Code of Federal Regulations. (See 53 Federal Register 32564, August 25, 1988, 51 Federal Register 26206, July 21, 1986 and 51 Federal Register 28322, August 7, 1986. The flammability standards are based on heat calorimetry tests developed at Ohio State University. Such tests are described in the above-cited amendments to 14 C.F.R. Parts 25 and 121 and are incorporated herein by reference.

Various means have been employed for enhancing the high temperature properties of engineering thermoplastics. In general, these means involve blending with the thermoplastic an additive or another polymer which reduces the overall flammability of the resin. For example, low-flammability blends of polyetherimides and polyetherimide-polycarbonate mixtures with certain siloxane polyetherimide copolymers are disclosed in copending U.S. patent applications, serial numbers 925,916 and 925,915, filed November 3, 1987. These blends maintain the good heat-release and smoke-release characteristics of polyetherimides and have improved impact strengths and processing characteristics.

A variety of known polymers and additives are characterized by very low flammabilities. However, simply blending such materials with high-performance engineering thermoplastics often does not yield a useable flame-resistant material. For example, the low-flammability material may not be compatible with the engineering thermoplastic at the concentrations required to impart significant flame retardance. E.g., the low-flammability material may not be miscible with the engineering thermoplastic, or it may not be stable at the processing temperatures of the engineering thermoplastic. Even low-flammability materials which are compatible with the engineering thermoplastic often cannot be used effectively to lower the flammability of the thermoplastic. If the effect on flammability is merely additive, the amount of the low-flammability material which must be added can adversely affect the physical properties or the processability of the engineering thermoplastic.

Perfluorocarbon polymers, such as polytetrafluoroethylene, fluorinated ethylene propylene, perfluoroalkoxy resin, and the like, are known to have very low flammabilities. Polymer blends containing a polyetherimide, a siloxane polyetherimide, perfluorocarbon polymer and titanium dioxide are disclosed in co-pending u.S. patent application serial no. 092,940 filed September 4, 1987.

U.S. patent 4,433,104, which issued to Harold F. Giles, Jr. on February 21, 1984 describes polyetherimide-fluorinated polyolefin blends which have good flexural strength and flexural modulus, and which have higher impact strengths than the unmodified polyetherimide. U.S. patent 4,532,054, which issued to Robert O. Johnson on July 30, 1984, discloses polyetherimide bearing compositions that contain a polyetherimide, a fluoropolymer, such as polytetrafluoroethylene, and various lubricants and reinforcing agents. Bearing compositions containing a thermoplastic resin, such as certain polyimides, and a filled polytetrafluoroethylene material are described by James W. Cairns in U.S. patent 3,994,814. The function of the perfluorcarbon polymers in the prior art blends has been to modify the impact strength or to lower the coefficient of friction of the polyetherimides with which they were blended.

A need continues to exist for high performance engineering thermoplastics which have very low flammabilities and smoke release characteristics.

## Summary of the Invention

In accordance with the present invention, improved flame resistant polymer blend compositions contain a polyetherimide, 0.2 to 15 weight percent of a siloxane polyetherimide and, optionally, a filler. Chopped glass fiber is a preferred filler.

It has been found that polymer blends within the scope of the invention exhibit excellent flame resistance without the need for additional flame-retarding additives. The polymer blends of this invention have excellent physical properties and are amenable to conventional melt-processing and thermoforming techniques.

## Detailed Description of the Invention

The polyetherimides employed in the blends of this invention are well-known injection moldable engineering thermoplastics. Polyetherimides are characterized by high impact strengths, high temperature resistance and good processability.

The polyetherimides used for preparing the blends of this invention contain repeating groups of the formula

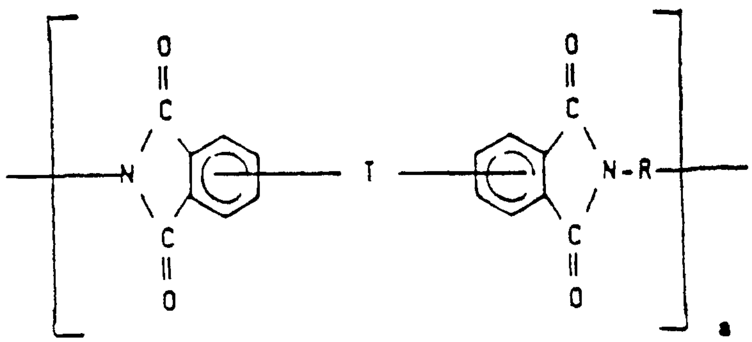

wherein "a" is an integer greater than 1, e.g., from 10 to 10,000 or more;
where T is -S-, -O-,

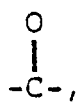, 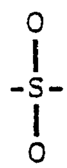 or $C_xH_{2x}$

or a group of the formula
-O-Z-O-
wherein the divalent bonds of the -O- or the -O-Z-O-group are in the 3,3′; 3,4 ; 4,3′, or the 4,4′ positions;
Z is a member of the class consisting of
(A):

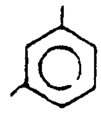 , 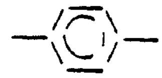 , 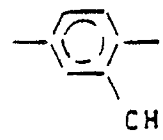 ,

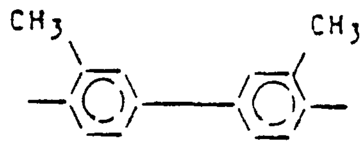 , 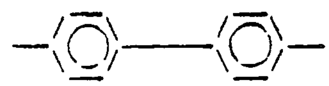

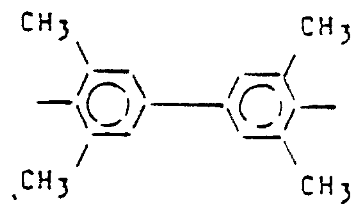 and 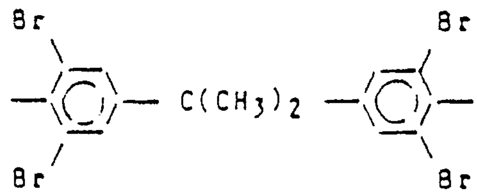

and (B) divalent organic radicals of the general formula

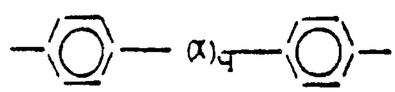

where X is a member selected from the group consisting of divalent radicals of the formulas

$$-C_yH_{2y}-, \quad -\overset{\overset{\displaystyle O}{\|}}{C}-, \quad -\overset{\overset{\displaystyle O}{\|}}{\underset{\underset{\displaystyle O}{\|}}{S}}-, \quad -O- \text{ and } -S-$$

where y is an integer from 1 to about 5; and R is a divalent organic radical selected from the group consisting of (a) aromatic hydrocarbon radicals having from 6 to about 20 carbon atoms and halogenated derivatives thereof, (b) alkylene radicals having from 2 to about 20 carbon atoms, cycloalkylene radicals having from 3 to about 20 carbon atoms, and (c) divalent radicals of the general formula

$$-S-, \quad -O-, \quad -\overset{\overset{\displaystyle O}{\|}}{C}-, \quad -\overset{\overset{\displaystyle O}{\|}}{\underset{\underset{\displaystyle O}{\|}}{S}}-, \text{ and } -C_xH_{2x}-$$

and x is an integer from 1 to about 5.

In one embodiment, the polyetherimide may be a copolymer which, in addition to the etherimide units described above, further contains polyimide repeating units of the formula

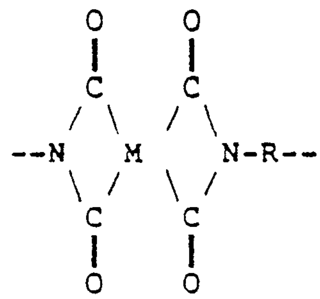

wherein R is as previously defined and M is selected from the group consisting of

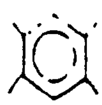 , 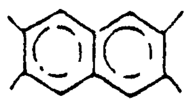 and 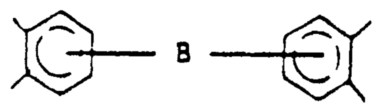

where B is

-S- or 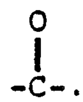

These polyetherimide copolymers and their preparation are described by Williams et al. in U.S. Patent 3,983,093, incorporated herein by reference.

The polyetherimides can be prepared by any of the methods well known to those skilled in the art, including the reaction of an aromatic bis(ether anhydride) of the formula

(I) 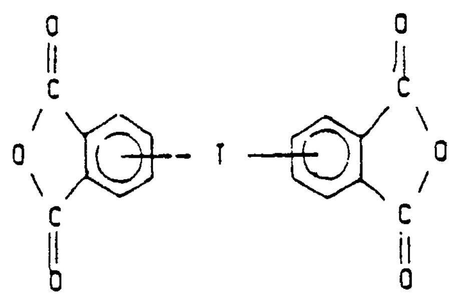

with an organic diamine of the formula

(II) $H_2N-R-NH_2$

wherein T and R are defined as described above.

Bis(ether anhydride)s of formula I include, for example,

1,3-bis(2,3-dicarboxyphenoxy)benzene dianhydride;

1,4-bis(2,3-dicarboxyphenoxy)benzene dianhydride;

1,3-bis(3,4-dicarboxyphenoxy)benzene dianhydride;

1,4-bis(3,4-dicarboxyphenoxy)benzene dianhydride;

and

4,4′-bis(phthalic anhydride)ether.

A preferred class of aromatic bis(ether anhydride)s included by formula I includes compounds of formula III, IV and V, which follow:

(III) 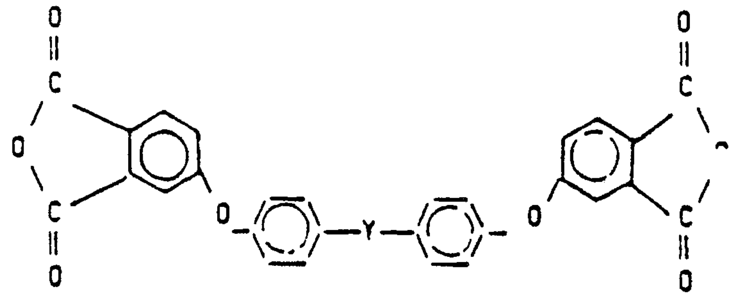

(IV) 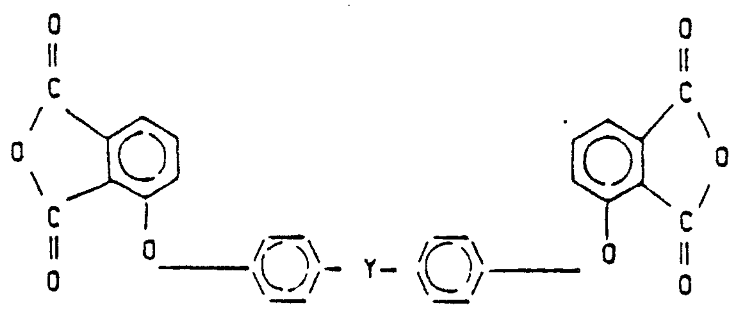

(V) 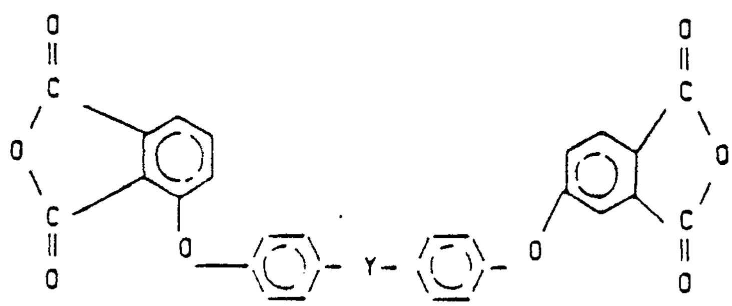

and mixtures thereof, where Y is selected from the group consisting of -O-, -S-,

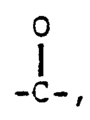 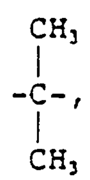 and 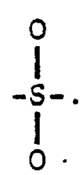

Aromatic bis(ether anhydride)s of formula III include, for example:
2,2-bis[4-(3,4-dicarboxyphenoxy)phenyl]propane dianhydride;
4,4′-bis(3,4-dicarboxyphenoxy)dipenyl ether dianhydride;
4,4′-bis(3,4-dicarboxyphenoxy)diphenyl sulfide dianhydride;
4,4′-bis(3,4-dicarboxyphenoxy)benzophenone dianhydride;
4,4′-bis(3,4-dicarboxyphenoxy)diphenyl sulfone dianhydride; and mixtures thereof.

Aromatic bis(ether anhydride)s of formula IV include, for example:
2,2-bis([4-(2,3-dicarboxyphenoxy)phenyl]propane dianhydride;
4,4′-bis(2,3-dicarboxyphenoxy)diphenyl ether dianhydride;
4,4′-bis(2,3-dicarboxyphenoxy)diphenyl sulfide dianhydride;
4,4′-bis(2,3-diacarboxyphenoxy)benzophenone dianhydride;
4,4′-bis(2,3-dicarboxyphenoxy)diphenyl sulfone dianhydride; and mixtures thereof.

The aromatic bis(ether anhydride)s of formula V may be, for example,
4-(2,3-dicarboxyphenoxy)-4′-(3,4-dicarboxyphenoxy)diphenyl-2,2-propane dianhydride;
4-(2,3-dicarboxyphenoxy)-4′-(3,4-dicarboxyphenoxy) diphenyl ether dianhydride;

4-(2,3-dicarboxyphenoxy)-4′-(3,4-dicarboxyphenoxy) diphenyl sulfide dianhydride;
4-(2,3-dicarboxyphenoxy)-4′-(3,4-dicarboxyphenoxy) benzophenone dianhydride;
4-(2,3-dicarboxyphenoxy)-4′-(3,4-dicarboxyphenoxy) diphenyl sulfone dianhydride, and mixtures thereof.

When polyetherimide/polyimide copolymers are employed, a dianhydride, such as pyromellitic anhydride, is used in combination with the bis(ether anhydride).

Some of the aromatic bis(ether anhydride)s of formula (I) are shown in U.S. patent 3,972,902 (Darrell Heath and Joseph Wirth). As described therein, the bis(ether anhydride)s can be prepared by the hydrolysis, followed by dehydration, of the reaction product of a nitrosubstituted phenyl dinitrile with a metal salt of dihydric phenol compound in the presence of a dipolar, aprotic solvent.

Additional aromatic bis(ether anhydride)s also included by formula (I) above are shown by Koton, M.M., Florinski, F.S., Bessonov, M.I. and Rudakov, A.P. (Institute of Heteroorganic Compounds, Academy of Sciences, U.S.S.R), U.S.S.R. patent 257,010, November 11, 1969, Appl. May 3, 1967, and by M.M. Koton, F.S. Florinski, Zh. Org. Khin. 4 (5), 774 (1968).

The organic diamines of formula (II) include, for example:

m-phenylenediamine,
p-phenylenediamine,
4,4′-diaminodiphenylpropane,
4,4′-diaminodiphenylmethane commonly named 4,4′-methylenedianiline),
4,4′-diaminodiphenyl sulfide,
4,4′-diaminodiphenyl sulfone, 4,4′-diaminodiphenyl ether (commonly named 4,4′-oxydianiline),
1,5-diaminonaphthalene,
3,3-diamethylbenzidine,
3,3-dimethoxybenzidine,
2,4-bis(beta-amino-t-butyl)toluene,
bis(p-beta-amino-t-butylphenyl)ether,
bis(p-beta-methyl-o-aminophenyl)benzene,
1,3-diamino-4-isopropylbenzene,
1,2-bis(3-aminopropoxy)ethane,
benzidine,
m-xylylenediamine,
2,4-diaminotoluene,
2,6-diaminotoluene,
bis(4-aminocyclohexyl)methane,
3-methylheptamethylenediamine,
4,4-dimethylheptamethylenediamine,
2,11-dodecanediamine,
2,2-dimethylpropylenediamine,
octamethylenediamine,
3-methoxyhexamethylenediamine,
2,5-dimethylhexamethylenediamine,
2,5-dimethylheptamethylenediamine,
3-methylheptamethylenediamine,
5-methylnonamethylenediamine,
1,4-cyclohexanediamine,
1,12-octadecanediamine,
bis(3-aminopropyl)sulfide,
N-methyl-bis(3-aminopropyl)amine,
hexamethylenediamine,
heptamethylenediamine,
nonamethylenediamine,
decamethylenediamine, and
mixtures of such diamines.

Preferred polyetherimides are available commercially from General Electric Company, Pittsfield, Massachusetts U.S.A. under the registered trademark ULTEM®.

The blends of this invention further contain a siloxane polyetherimide copolymer. In accordance with the present invention, it has been found that, by incorporating into such blends from about 0.2 to about 15 weight percent of the siloxane polyetherimide, the flammability can be substantially reduced.

The siloxane polyetherimide copolymers employed in the blends of this invention may be prepared in a

manner similar to that used for polyetherimides, except that a portion or all of the organic diamine reactant is replaced by an amine-terminated organosiloxane of the formula

$$\text{(VI)} \qquad H_2N-(R)_n-\underset{\underset{R-3}{|}}{\overset{\overset{R-1}{|}}{Si}}-(O-\underset{\underset{R-4}{|}}{\overset{\overset{R-2}{|}}{Si}})_g-(R)_m-NH_2$$

wherein n and m independently are integers from 1 to about 10, preferably from 1 to about 5, g is an integer from 5 to about 40, preferably from about 5 to about 25, R can be $-C_xH_{2x}-$ or phenyl and R-1 through R-4 each can be any of -H, $-CH_3$, $-CXH_{2x}CH_3$ or phenyl.

The organic diamine of formula II and the amine-terminated organosiloxane of formula VI may be physically mixed prior to reaction with the bis(ether anhydride)(s), thus forming a substantially random copolymer. Alternatively, block or alternating copolymers may be used.

Preferred amine-terminated organosiloxanes are those of the formula VI, in which n and m are each 3, and which have a molecular weight distribution such that g has an average value ranging from about 9 to about 20.

The diamine component of the siloxane polyetherimide copolymers generally contains from about 20 to 50 mole % of the amine-terminated organosiloxane of formula VI and from about 50 to 80 mole % of the organic diamine of formula II. In preferred copolymers, the diamine component contains from about 30 to about 45 mole %, most preferably about 40 mole % of the amine-terminated organosiloxane.

Both the polyetherimides and the siloxane polyetherimide copolymers used in the blends of this invention may be prepared by any of the procedures conventionally used for preparing polyetherimides. A presently preferred method of preparation is described in U.S. patent 4,417,044 to Parekh, which is incorporated herein by reference.

Blending a siloxane polyetherimide copolymer with a polyetherimide within the concentrations of the present invention, in addition to greatly improving high temperature properties, enhances other important physical properties of the polyetherimide. In particular, the impact strength of the blend is considerably better than that of the unmodified polyetherimide. In addition, the blend is easily fabricated into useful parts by sheet extrusion, thermoforming, injection molding and blow molding. Blow molding can be an efficient and economical procedure for mass production of certain types of components. The heat distortion temperatures (HDT) of the blends of this invention are quite high, especially in view of the rather low HDT's of unblended siloxane polyetherimide copolymers. Further advantages of polyetherimide/siloxane polyetherimide copolymer blends are their greater resistance to crack propagation and enhanced retention of impact resistance after heat aging as compared to corresponding unmodified polyetherimides. The latter property can be important in applications requiring thermoforming.

The siloxane polyetherimide copolymer is employed in the present blends in concentrations of from 0.2 to 15 weight percent (wt. %), based on the weight of the total composition. Such concentations of siloxane polyetherimide have been found to result in unexpectedly high heat resistance and heat release when compared to compositions containing concentrations of siloxane polyetherimide falling outside this range.

An alternative embodiment of this invention is directed to compositions of a polyetherimide-siloxane polyetherimide copolymer blend which contains a filler, such as chopped glass fiber filler. It has been discovered that glass fibers can have a substantial effect on the heat-release chracteristics of polyetherimide-siloxane polyetherimide copolymer blends of the invention. An especially preferred filler consists of 1/8 inch chopped glass fiber. Preferred compositions according to the invention include from about 5 to about 50 weight percent, more preferably from 10 to 30 weight percent, of chopped glass fiber filler.

The heat-release characteristics of the polymer can be determined by the procedures described in Part 25 of Title 14 of the Code of Federal Regulations referred to above. These procedures employ a device known as the Ohio State University (O.S.U.) rate-of-heat-release apparatus for quantifying both heat release and peak heat release rate. According to the test protocol, a standard size test panel is exposed to relatively intense radiant heat. The panel is then ignited, if possible, and the heat released therefrom is measured.

In addition to the polymeric ingredients, the blends may contain other materials, such as fillers, additives, reinforcing agents, pigments and the like. The compositions of this invention exceed the

flammability standards of Part 25 of Title 14 of the Code of Federal Regulations.

Various blends have been prepared in accordance with this invention and tested for heat release on the Ohio State University apparatus. The results of these tests are shown in the following examples, which are provided for illustration only and are not intended to be limiting.

## Examples 1-24

Polymer blends described in Table I below were prepared by a conventional melt-blending procedure using a laboratory extruder. The blends were extruded into small diameter strands, which were chopped into pellets for further molding into test panels.

The polyetherimide resins employed in these experiments are commercially available resins sold by General Electric Company under the trademark ULTEM®. The polyetherimide identified in Table I as ULTEM 1000 is a homopolymer prepared by reacting 2,2-bis[4-(3,4-dicarboxyphenoxy)phenyl] propane dianhydride ("BPA-DA") and m-phenylenediamine. ULTEM D5001 is a homopolymer prepared by reacting BPA-DA with p-phenylenediamine and ULTEM 6000 is a copolymer prepared by reacting BPA-DA and pyromellitic dianhydride with m-phenylenediamine. The siloxane polyetherimide copolymer designated in Table I as ULTEM D9000 is a copolymer prepared by reacting BPA-DA with m-phenylenediamine and bis-gamma amino propyl(polydimethylsiloxane).

The amount of each component of each of the exemplary blends is expressed as percent by weight based on the total weight of the blend.

Table I

| | 1 | 2 | 3 | 4 | 5 | 6 | 7 | 8 |
|---|---|---|---|---|---|---|---|---|
| ULTEM® 1000, wt. % | 90.0 | 88.0 | 85.0 | 80.0 | 70.0 | 68.0 | 65.0 | 60.0 |
| 1/8" Glass Fibers | 10.0 | 10.0 | 10.0 | 10.0 | 30.0 | 30.0 | 30.0 | 30.0 |
| ULTEM® D9000 | 0 | 2.0 | 5.0 | 10.0 | 0 | 2.0 | 5.0 | 10.0 |
| 2 Min. Heat Release (HR, KW*Min/$m^2$) | 27 | 3 | 0 | 2 | 20 | 0 | 0 | 2 |
| Peak Heat Release Rate (HRR, KW/$m^2$) | 64 | 33 | 25 | 21 | 56 | 21 | 19 | 39 |
| | 9 | 10 | 11 | 12 | 13 | 14 | 15 | 16 |
| ULTEM® 1000 | 100.0 | 99.8 | 99.5 | 99.0 | 98.0 | 95.0 | 90.0 | 85.0 |
| ULTEM® D9000 | 0.0 | 0.2 | 0.5 | 1.0 | 2.0 | 5.0 | 10.0 | 15.0 |
| 2 Min. HR | 37 | 32 | 18 | 17 | 9 | 0 | 4 | 19 |
| Peak HRR | 68 | 60 | 53 | 52 | 38 | 27 | 28 | 61 |
| | 17 | 18 | 19 | 20 | | | | |
| ULTEM® D6001 | 100.0 | 95.0 | 85.0 | 70.0 | | | | |
| ULTEM® D9000 | 0.0 | 5.0 | 15.0 | 30.0 | | | | |
| 2 Min. HR | 3 | 0 | 1 | 19 | | | | |
| Peak HRR | 57 | 19 | 28 | 70 | | | | |
| | 21 | 22 | 23 | 24 | | | | |
| ULTEM® 5000 | 100.0 | 95.0 | 85.0 | 70.0 | | | | |
| ULTEM® D9000 | 0.0 | 5.0 | 15.0 | 30.0 | | | | |
| 2 Min. HR | 11 | 0 | 8 | 20 | | | | |
| Peak HRR | 55 | 25 | 50 | 62 | | | | |

## Claims

1. A polymer blend which comprises a polyetherimide and 0.2 to 15 weight percent, based on the weight of the polyetherimide, of a siloxane polyetherimide copolymer, wherein the polyetherimide contains repeating

units of the formula

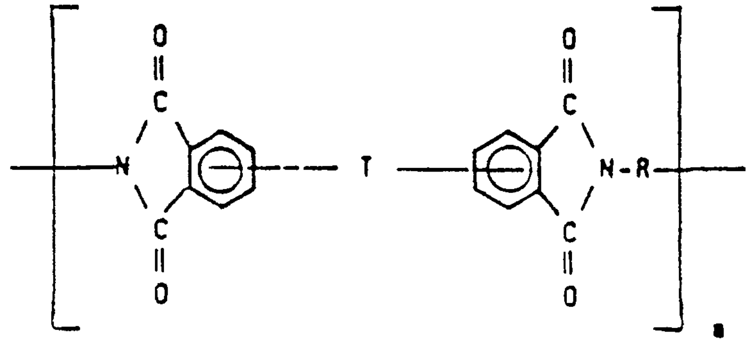

and the siloxane polyetherimide copolymer consists essentially of repeating units of the formula

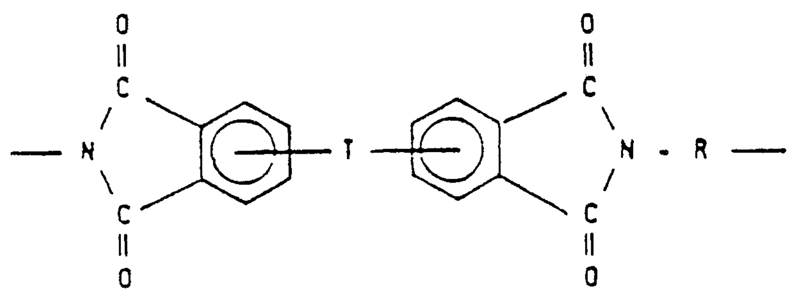

and repeating units of the formula

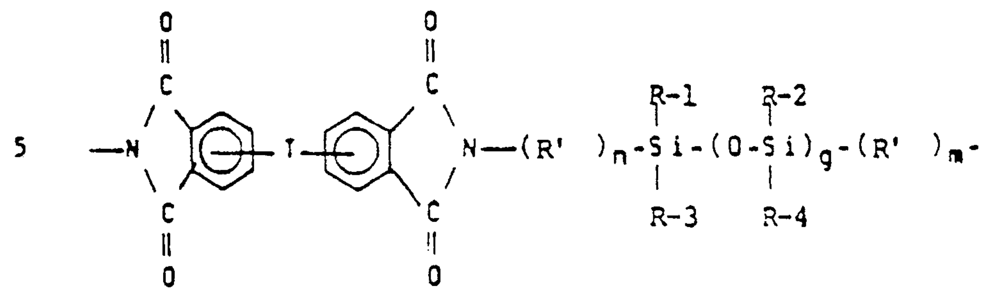

wherein R′ is $C_xH_{2x}$ or phenyl; R-1 through R-4 independently are H, $C_xH_{2x}$ $CH_3$ or phenyl;
where T is -S-, -O-,

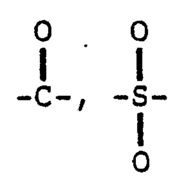

or $C_xH_{2x}$ or a group of the formula
-O-Z-O-
wherein the divalent bonds of the -O- or the -O-Z-O- group are in the 3,3′, 3,4′, 4,3′ or 4,4′ positions;
Z is a member of the class consisting of
(A)

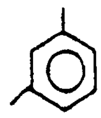 , 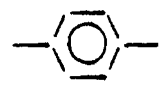 , 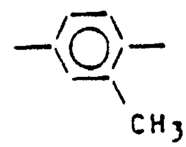 ,

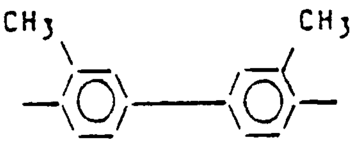 , 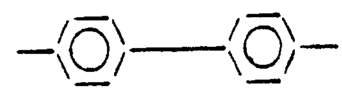

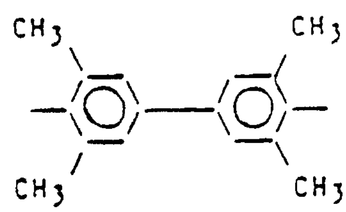 and 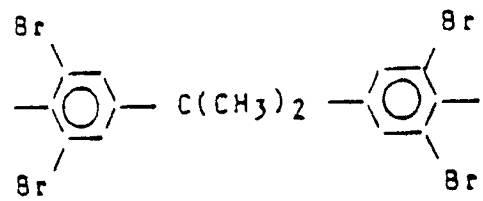

and (B) divalent organic radicals of the general formula

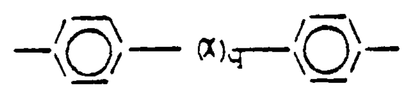

where X is a member selected from the group consisting of divalent radicals of the formulas

$$-C_yH_{2y}-,\quad -\overset{O}{\overset{\|}{C}}-,\quad -\overset{O}{\overset{\|}{\underset{\underset{O}{\|}}{S}}}-,\quad -O-\ \text{and}\ -S-$$

where y is an integer from 1 to about 5; and R is a divalent organic radical selected from the group consisting of (a) aromatic hydrocarbon radicals having from 6 to about 20 carbon atoms and halogenated derivatives thereof, (b) alkylene radicals having from 2 to about 20 carbon atoms, cycloalkylene radicals having from 3 to about 20 carbon atoms, and (c) divalant radicals of the general formula

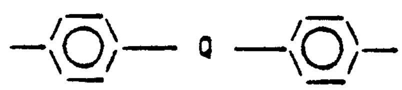

where Q is a member selected from the group consisting of

$$-S-,\quad -O-,\quad -\overset{O}{\overset{\|}{C}}-,\quad -\overset{O}{\overset{\|}{\underset{\underset{O}{\|}}{S}}}-,\ \text{and}\ -C_xH_{2x}-,$$

x is an integer from 1 to about 5, n and m independently are integers from 1 about 10 and g is an integer

from 5 to about 40.

2. A polymer blend of claim 1 wherein the polyetherimide further contains repeating units of the formula

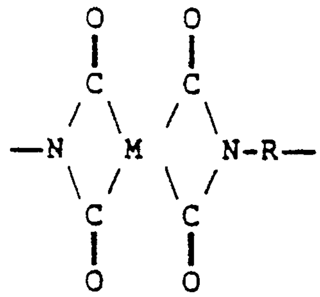

wherein R is as defined in claim 1 and M is selected from the group consisting of

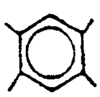 , 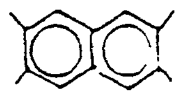 and 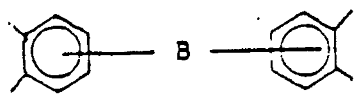

where B is

-S- or 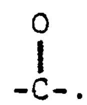

3. A polymer blend of claim 1 wherein n and m are integers from 1 to about 5, and g is an integer from 5 to about 25.

4. A polymer blend of claim 3 wherein g has an average value from 9 to about 20.

5. A polymer blend of claim 1 wherein the organosiloxane-containing repeating unit constitutes from about 20 to about 50 mole % of the siloxane polyetherimide copolymer.

6. A polymer blend of claim 1 wherein the organosiloxane-containing repeating unit constitutes from about 25 to about 40 mole % of the siloxane polyetherimide copolymer.

7. A polymer blend of claim 1 which contains about 5 weight percent of the siloxane polyetherimide copolymer.

8. A polymer blend of claim 1 further comprising from about 5 to about 50 weight percent of glass fiber.

9. A polymer blend of claim 2 further comprising from about 5 to about 50 weight percent of glass fiber.

10. A polymer blend of claim 4 further comprising from about 5 to about 50 weight percent of glass fiber.

11. A polymer blend of claim 8 wherein n and m are integers from 1 to about 5, and g is an integer from 5 to about 25.

12. A polymer blend of claim 11 wherein g has an average value from 9 to about 20.

13. A polymer blend of claim 11 wherein the organosiloxane-containing repeating unit constitutes from about 20 to about 50 mole % of the siloxane polyetherimide copolymer.

14. A polymer blend of claim 11 wherein the organosiloxane-containing repeating unit constitutes from about 30 to about 45 mole % of the siloxane polyetherimide copolymer.

15. A polymer blend of claim 11 which contains about 10 weight percent of the siloxane polyetherimide copolymer.

16. A polymer blend of claim 15 wherein the polyetherimide consists essentially of repeating units of the formula

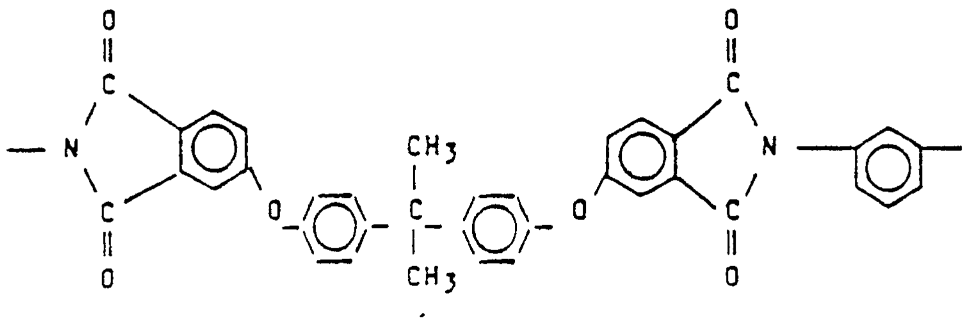

European Patent Office

# EUROPEAN SEARCH REPORT

Application Number

EP 90116059.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | EP - A2 - 0 266 595 (GENERAL ELECTRIC COMPANY) * Claims * | 1-16 | C 08 L 79/08/ (C 08 L 79/08 C 08 L 83:12) |
| D,X | EP - A1 - 0 307 670 (GENERAL ELECTRIC COMPANY) * Claims; page 10, lines 13-14 * | 1-16 | |
| X | WO - A1 - 89/05 332 (GENERAL ELECTRIC COMPANY) * Claims * | 1-16 | |
| A | EP - A1 - 0 122 308 (GENERAL ELECTRIC COMPANY) * Claim 1; page 12, line 22 * | 1,8 | |

TECHNICAL FIELDS SEARCHED (Int. Cl.5)

C 08 L 79/00
C 08 L 83/00

The present search report has been drawn up for all claims

| Place of search | Date of completion of the search | Examiner |
|---|---|---|
| VIENNA | 26-11-1990 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document